# EUROPEAN PATENT SPECIFICATION

(11) **EP 4 614 441 B1**
(45) Date of publication and mention of the grant of the patent: **12.08.2026**
(21) Application number: 24162511.0
(22) Date of filing: 08.03.2024
(51) Int. Cl.: G06T 7/50

(54) **METHOD AND SYSTEM FOR TRAINING A NEURAL NETWORK FOR GENERATING A THREE-DIMENSIONAL REPRESENTATION OF A SCENE**
VERFAHREN UND SYSTEM ZUM TRAINIEREN EINES NEURONALEN NETZES ZUR ERZEUGUNG EINER DREIDIMENSIONALEN DARSTELLUNG EINER SZENE
PROCÉDÉ ET SYSTÈME D'APPRENTISSAGE D'UN RÉSEAU NEURONAL POUR GÉNÉRER UNE REPRÉSENTATION TRIDIMENSIONNELLE D'UNE SCÈNE

(43) Date of publication of application: 10.09.2025
(73) Proprietor: TOYOTA JIDOSHA KABUSHIKI KAISHA, Aichi-ken 471-8571 (JP); ETH Zurich, 8092 Zürich (CH)
(72) Inventor: ABBELOOS, Wim, 1140 BRUSSELS (BE); PICCINELLI, Luigi, CH-8092 Zurich (CH); YANG, Yung-Hsu, CH-8092 Zurich (CH); SAKARIDIS, Christos, CH-8092 Zurich (CH); SEGU, Mattia, CH-8092 Zurich (CH); LI, Siyuan, CH-8092 Zurich (CH); VAN GOOL, Luc, CH-8092 Zurich (CH); YU, Fisher, CH-8092 Zurich (CH)
(74) Representative: Cabinet Beau de Loménie

(56) References cited:
- BARADAD MANEL ET AL: "Height and Uprightness Invariance for 3D Prediction From a Single View", 2020 IEEE/CVF CONFERENCE ON COMPUTER VISION AND PATTERN RECOGNITION (CVPR), IEEE, 13 June 2020 (2020-06-13), pages 488 - 497, XP033804696, DOI: 10.1109/CVPR42600.2020.00057
- JINFENG LIU ET AL: "Towards Better Data Exploitation In Self-Supervised Monocular Depth Estimation", ARXIV.ORG, CORNELL UNIVERSITY LIBRARY, 201 OLIN LIBRARY CORNELL UNIVERSITY ITHACA, NY 14853, 11 September 2023 (2023-09-11), XP091609791
- IGOR VASILJEVIC ET AL: "Neural Ray Surfaces for Self-Supervised Learning of Depth and Ego-motion", ARXIV.ORG, CORNELL UNIVERSITY LIBRARY, 201 OLIN LIBRARY CORNELL UNIVERSITY ITHACA, NY 14853, 15 August 2020 (2020-08-15), XP081742151

## Description

### 1. Field of the Invention

The present disclosure is related to the field of computer vision. More precisely, the present disclosure relates to neural networks able to determine a three-dimensional (3D) representation of a scene using only a single image of the scene as an input.

### 2. Description of Related Art

Monocular Depth Estimation (MDE) is the task of estimating a distance relative to a camera, or depth value, of each pixel given a single, or monocular, image acquired by the camera. This task is a prerequisite for applications such as 3D scene reconstruction, autonomous driving, and Augmented Reality (AR) or Virtual Reality (VR).

Some known MDE methods include supervised learning-based approaches, such as monocular depth prediction using deep convolutional neural networks (CNNs) trained on large datasets. BARADAD MANEL et al: "Height and Uprightness Invariance for 3D Prediction From a Single View", discloses a method for 3D scene representation from a single image and independent of camera parameters. JINFENG LIU et al: "Towards Better Data Exploitation In Self-Supervised Monocular Depth Estimation", discloses a training method for monocular depth estimation using multiple networks with shared weight and self distillation loss. IGOR VASILJEVIC et al: "Neural Ray Surfaces for Self-Supervised Learning of Depth and Ego-motion" discloses a method to learn depth from monocular image by using a learnt camera representation based on a matrix of rays orientation.

In order to predict the depth information of a scene from a single image, such an MDE method relies on a training model which understands the complex relationships between objects in the scene and the corresponding depth information, which can be affected by factors such as lighting conditions, occlusion, texture, etc.

While existing MDE methods prove to be accurate, they require training and testing on datasets consisting in images acquired by cameras having similar intrinsic parameters and scene scales. Moreover, the training datasets typically have a limited size and contain little diversity in scenes and cameras. Consequently, these characteristics result in poor generalization to real-world inference scenarios, where images are acquired by cameras having arbitrary intrinsic parameters in uncontrolled, arbitrarily structured environments.

Therefore, there is scope for improvement.

### SUMMARY OF THE INVENTION

The invention is defined by the appended claims. To this end, the present invention first provides a computer implemented method for training a first neural network for generating a three-dimensional (3D) representation of a scene, the method comprising:
- inputting a first image of the scene acquired by a first camera to the first neural network, said first neural network being configured to:
- determine a first 3D representations of the scene based on a representation of the first camera determined by the first neural network from said first image, said representation of the first camera being a tensor ∈ R^{HxWx2} where H and W are respectively the height and width of the image acquired by the first camera, and the last dimension corresponding to a first azimuth θ and a first elevation φ, and a first camera-conditioned depth feature map of the scene determined by the first neural network by computing a Laplace Spherical Harmonic Encoding (SHE) E ∈ R^{HxWxd} of said tensor C where d is the number of harmonics of the SHE;
- minimizing a loss *L*_{*λMSE*1} which is a difference between said first 3D representation of the scene and a ground truth 3D representation of the scene.

Thanks to this training method, a neural network can predict a 3D representation of a scene from a single image of said scene waiving the need for additional external information, such as camera intrinsic parameters, thus defining a universal MDE method where the depth is given in meter. This is achieved by training the neural network using both a loss and a ground truth enabling the neural network to learn to directly determine a depth expressed in meter.

More particularly, based on an image of a given scene and on parameters pertaining the pixels of said image of the scene, the trained neural network determines a representation of the camera used to acquire this image. This representation of the camera corresponds to its intrinsic parameters. Intrinsic camera parameters usually include the scale factor, the focal length, the coordinates of the principal point, the skew and the geometric distortion of the camera and are estimated by performing a camera calibration procedure. Once the values of those parameters are obtained, they allow to project 3D points of the scene, which coordinates are expressed in the world coordinate system, onto the 2D image plane.

This camera presentation obtained by the neural network is then used, by said neural network, to determine a camera-conditioned depth feature map of the scene. Using the predicted camera representation as an input for predicting a camera-conditioned depth feature map renders the present method less subject to noise which in turn contributes to improve its robustness. The 3D representation of the scene predicted by the neural network is the concatenation of the predicted camera representation and the camera-conditioned depth feature map.

In particular implementations, the method further comprises:
- inputting at least a second image of the scene acquired by a second camera to at least a second neural network, said second neural network being configured to:
   - determine a second 3D representations of the scene based on a representation of the second camera determined by the second neural network from said second image, said representation of the first camera being a tensor ∈ R^{HxWx2} where H and W are respectively the height and width of the image acquired by the first camera, and the last dimension corresponding to a first azimuth θ and a first elevation φ, and a second camera-conditioned depth feature map of the scene determined by the second neural network by computing a Laplace Spherical Harmonic Encoding (SHE) E ∈ R^{HxWxd} of said tensor C where d is the number of harmonics of the SHE;
- minimizing a loss *L*_{*λMSE*2} which is a difference between said second 3D representation of the scene and the ground truth 3D representation of the scene; and
- jointly training the first and second neural networks by minimizing a final optimization loss consisting in a sum of the loss *L_{λMSEi}* and a consistency loss *L*_{con}.

Jointly training the neural networks can be performed iteratively. For example, each iteration can comprise inputting a first image of a scene to the first neural network and a second image of said scene to the second neural network and minimizing, for each of the trained neural network, an error between the 3D representations of the scene they generated and a ground truth 3D representation value of the scene. After each calculation of a value of this error, or after a plurality of calculations, the stochastic gradient descent may be used or any other suitable training algorithm or variant of the stochastic gradient descent. The stochastic gradient descent can be used to adapt the weights of the first neural network and the second neural network in a known manner.

In particular implementations, determining the 3D representation of the scene comprises determining for each pixel of the first image, in a spherical coordinate system of the first camera, an azimuth *θ*, an elevation *φ* and a logarithmic depth *z_{log}.*

The training method outputs the 3D representation of the scene as a set of spherical coordinates: azimuth, elevation, and log-depth, i.e. (*θ*, *ϕ*, *z_{log}*)*.* In contrast to the Cartesian representation (*x, y, z*) in which the components pertaining to the camera and depth components are entangled by design, the proposed 3D representation advantageously enables the decoupling of camera (*θ*, *ϕ*) and depth (*z_{log}*) components, ensuring their orthogonality by design. Consequently, the depth value of a given pixel of the image acquired by the camera is directly provided in meter.

In particular implementations, the second image is obtained by applying a geometrical transformation to the first image.

More particularly, the geometrical transformation is a resizing and/or a mirroring and/or a translation of the first image.

Applying a geometrical transformation to an image of a scene is analogous to sampling a pair of images from this scene acquired by different cameras. It is a convenient and cost friendly way of obtaining images of a same scene as if they were acquired by different cameras.

In particular implementations, the representation of a camera determined by at least one of the neural networks being a tensor *C* ∈ *R*^{*H*×*W*×2} where H and *W* are respectively the height and width of the image acquired by the camera, and the last dimension corresponding to azimuth *θ* and elevation *φ*, the method comprises:
computing a Laplace Spherical Harmonic Encoding (SHE) *E* ∈ *R*^{*H*×*W*×*d*} of said tensor C where d is the number of harmonics of the SHE, said tensor *E* being used to determine a camera-conditioned depth feature map of the scene.

The number of harmonics of a SHE impacts the values of the features of the tensor E. Using a greater number of harmonics, more than a hundred, provides a finer representation of the features of the tensor E which in turn will lead to a better prediction of the 3D representation of the scene.

However, this can also lead to an increase in computational complexity. The choice of the number of harmonics may be a matter of balancing the desired accuracy of the representation with the available computational resources.

In particular implementations, a camera-conditioned depth feature map *D*|*E* ∈ *R*^{*h*×*w*×*c*} of the scene is defined as: $\left.D\right| E = MLP \left(CA\left(D, E\right)\right)$ where (*h, w*) = *(H*/*x, W*/*x)* where x represents a computational parameter, CA is a cross-attention block and MLP is a Multi-Layer Perceptron with at least one hidden layer and *D* ∈ *R*^{*h*×*w×c*} is an initialisation depth map.

In particular implementations, the consistency loss is a difference between the first camera-conditioned depth feature map and the second camera-conditioned depth feature map that have been previously aligned with each other.

The spatial locations from a same scene captured by different cameras should correspond when the neural network is conditioned on one of the cameras used to acquired images of the scene. In other words, if the scene represents an armchair, the spatial locations corresponding for example to the back of the armchair or to an armchair, should be similar from one image to another. To this end, a geometric invariance loss *L*_{con} is used to enforce the consistency of the first and the second camera-conditioned depth feature maps predicted respectively by the first and the second neural networks. More particularly, consistency is enforced on features extracted from identical locations in the original image.

According to a second aspect, the present invention concerns a neural network trained by the method according to the invention.

According to a third aspect, the present invention concerns a system for training a first neural network for generating a three-dimensional (3D) representation of a scene when an image of the scene is inputted to the first neural network, the system comprising:
- a first neural network being configured to:
   - obtain a first image of the scene acquired by a first camera;
   - determine a first 3D representations of the scene based on a representation of the first camera determined by the first neural network from said first image, said representation of the first camera being a tensor ∈ R^{HxWx2} where H and W are respectively the height and width of the image acquired by the first camera, and the last dimension corresponding to a first azimuth θ and a first elevation φ, and a first camera-conditioned depth feature map of the scene determined by the first neural network by computing a Laplace Spherical Harmonic Encoding (SHE) E ∈ R^{HxWxd} of said tensor C where d is the number of harmonics of the SHE; a first training module configure to minimize a loss *L*_{*λMSE*1} which is a difference between said first 3D representation of the scene and a ground truth 3D representation of the scene.

In a particular implementation, the training system further comprises:
- a second neural network configured to:
   - obtain a second image of the scene acquired by a second camera;
   - determine a second 3D representations of the scene based on a representation of the second camera determined by the second neural network from said second image, said representation of the first camera being a tensor ∈ R^{HxWx2} where H and W are respectively the height and width of the image acquired by the first camera, and the last dimension corresponding to a first azimuth θ and a first elevation φ, and a second camera-conditioned depth feature map of the scene determined by the second neural network by computing a Laplace Spherical Harmonic Encoding (SHE) E ∈ R^{HxWxd} of said tensor C where d is the number of harmonics of the SHE;
- a second training module configured to minimize a loss *L*_{*λMSE*2} which is a difference between said second 3D representation of the scene and the ground truth 3D representation of the scene;
- a third training module configured to jointly train the first neural network and the second neural network by minimizing a final optimization loss consisting of a sum of the loss *L_{λMSE}* and a consistency loss *L*_{con}.

According to a fourth aspect, the present invention concerns a system comprising the neural network trained by the method according to the invention.

According to a fifth aspect, the present invention concerns a vehicle comprising the system comprising the neural network trained by the method according to the invention.

Embodiments of the present invention also extend to programs which, when run on a computer or processor, cause the computer or processor to carry out the method described above or which, when loaded into a programmable device, cause that device to become the device described above. The program may be provided by itself or carried by a carrier medium. The carrier medium may be a storage or recording medium, or it may be a transmission medium such as a signal. A program embodying the present invention may be transitory or non-transitory.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
Figure 1 depicts for illustrative purposes a data flow diagram of a training method according to a particular implementation of the invention;
Figure 2 illustrates a particular implementation of a system 1000 according to the invention;
Figure 3 illustrates an example of the hardware architecture of the system illustrated by Figure 2; and
Figure 4 is a flowchart of a training method according to a particular implementation of the invention,
Figure 5 illustrates the impact of noise on the representation of the camera.

### DETAILED DESCRIPTION OF EMBODIMENTS

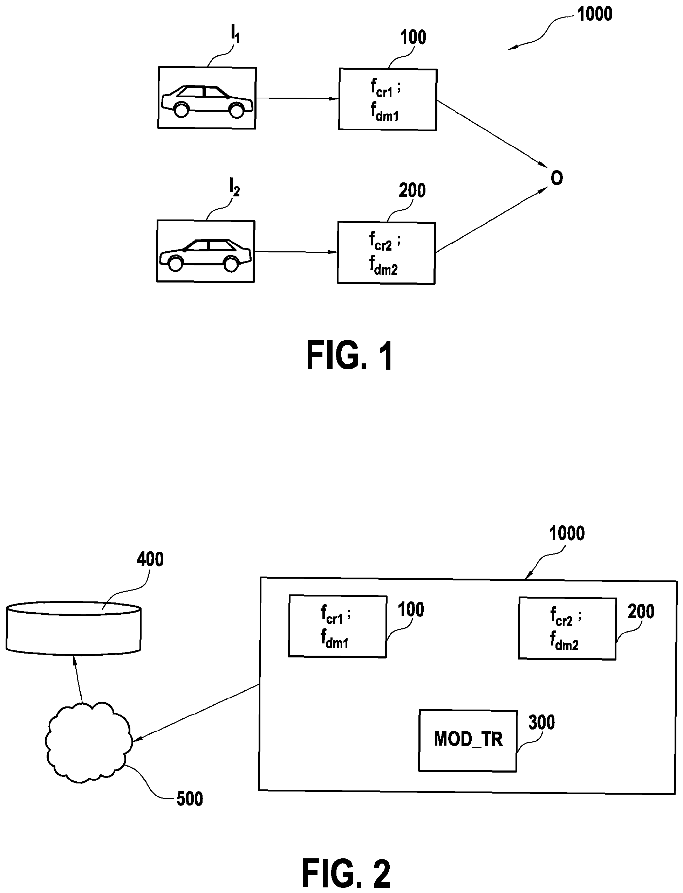

**Figure 1** depicts for illustrative purposes a data flow diagram of a training method according to a particular implementation of the invention.

The invention remains applicable whatever the nature of the neural network considered (convolutional, perceptron, auto-encoder, recurrent, etc.), in particular for any deep neural network.

As illustrated by Figure 1, the data flow diagram comprises a step of inputting a first image *I*₁ of a scene to a first neural network 100 implementing a first function *f*_{*cr*1} that determines a representation *C*₁ ∈ *R*^{*H*×*W*×2} of the camera Cam1 used to acquire the first image *I*₁, and a second function *f*_{*df*1} that determines a camera-conditioned depth feature map *D*₁|*E*₁ ∈ *R*^{*h*×*W*×*C*1} of the scene based on the representation *C*₁ of the camera Cam1. The representation *C*₁ of the camera Cam1 is a tensor of dimensions *H* × *W* × 2 where *H* and *W* are respectively the height and width of the image *I*₁ acquired by the camera Cam1, and the last dimension corresponding to azimuth *θ* and elevation *φ*. The camera-conditioned depth feature map *D*₁|*E*₁ is a tensor of dimensions *h* × *w* × *C*₁ where $\left(h, w\right) = \left(\frac{H}{x}, \frac{W}{x}\right)$. In order to reduce the number of computations and the memory consumption of the first neural network 100, the size of the camera-conditioned depth feature map is reduced. Thus, H/x,W/x means the camera-conditioned depth feature map is one xth of the size of the image acquired by camera Cam1.

In the continuation of the document, x has a value of 16. It should be noted that x can take any other value as long as the corresponding computation requirement allows the model to be deployable on the utilized medium.

The first neural networks 100 then outputs a three-dimensional (3D) representation of the scene *O*₁ ∈ R^{*H*×*W*×3} which is the concatenation of the representation *C*₁ of the camera Cam1 and depth *Z*_{*log*1} : *O*₁ = *C*₁ ∥ *Z*_{*log*1}.. Thus, the 3D representation *O*₁ of the camera Cam1 is a set of spherical coordinates: azimuth, elevation, and *log*-depth, i.e. (*θ, ϕ, z_{log}*).

In another implementation of the method, the data flow diagram also comprises a step of inputting a second image *I*₂ of the same scene to a second neural network 200 implementing a third function *f*_{*cr*2} that determines a representation *C*₂ ∈ *R*^{*H*×*W×*2} of the camera Cam2 used to acquire the second image *I*₂, and a fourth function *f*_{*df*2} that determines a camera-conditioned depth feature map *D*₂|*E*₂ ∈ *R*^{*h*×*W*×*C*2} of the scene based on the representation *C*₂ of the camera Cam2. The representation *C*₂ of the camera Cam2 is a tensor of dimensions *H* × *W* × 2 where *H* and *W* are respectively the height and width of the image *I*₂ acquired by the camera Cam2, and the last dimension corresponding to azimuth *θ* and elevation *φ*. The camera-conditioned depth feature map *D*₂|*E*₂ is a tensor of dimensions *h* × *w* × *C*₂ where $\left(h, w\right) = \left(\frac{H}{16}, \frac{W}{16}\right)$.

As the first neural network 100, the second neural networks 200 outputs a three-dimensional representation of the scene *O*₂ ∈ *R*^{*H*×*W*×3} which is the concatenation of the representation *C*₂ of the camera Cam2 and depth *Z*_{*log*2} *: O*₂ *= C₂* ∥ *Z*_{*log*2}.

**Figure 2** illustrates a particular implementation of a system 1000 according to the invention.

As illustrated by Figure 2, the system 1000 comprises:
- a first neural network 100 implementing a first function *f*_{*cr*1} and a second function *f*_{*df*1}. This first neural network is configured to output a 3D representation of a scene *O*₁ ∈ *R*^{*H*×*W*×3} . It takes as input a first image *I*₁ of the scene,
- a second neural network 200 implementing a third function *f*_{*cr*2} and a fourth function *f*_{*df*2}. This second neural network is configured to output a 3D representation of the scene *O*₂ ∈ *R*^{*H*×*W*×3} . It takes as input a first image *I*₂ of the scene.

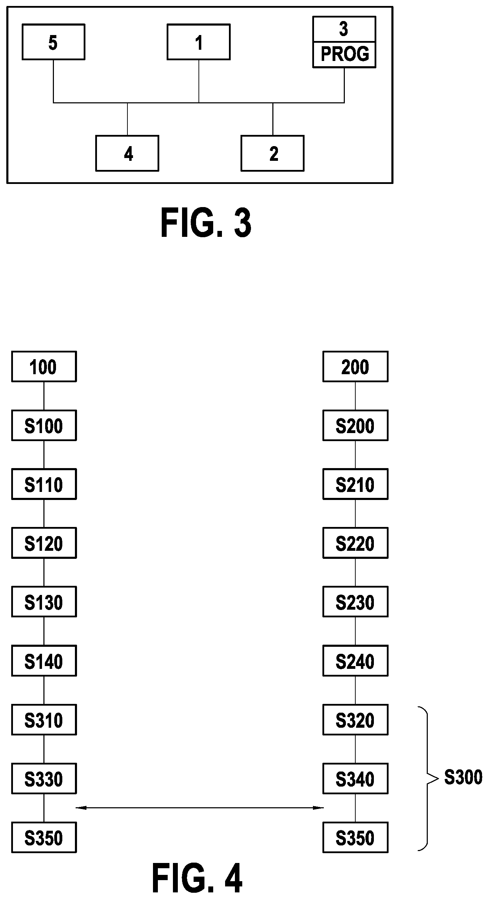

In this implementation, the system 1000 also comprises a module 300 (MOD_TR) configured for jointly training the first and second neural networks. The functionalities of that module are further detailed with respect to Figure 4.

As illustrated by Figure 2, the system 1000 is connected to a database 400 storing a plurality of training datasets *Tᵢ* , each training set comprising an image of a same scene *Iᵢ*.

In particular implementations, the second image *I*₂ is obtained by applying a geometrical transformation *T*₂ to the first image *I*₁. A geometrical transformation *T*₁ can also be applied to the first image *I*₁ prior to its input in the first neural network 100.

More particularly, the geometrical transformation *Tᵢ* can be, for example, a resizing and/or a mirroring of an image of the scene.

Applying a geometrical transformation to an image of a scene is analogous to sampling a pair of images from this scene acquired by different cameras. It is a convenient and cost friendly way of obtaining images of a same scene as if they were acquired by different cameras.

The system 1000 and the database 400 may be connected using a wired or wireless connection, via a telecommunication network 500.

**Figure 3** illustrates an example of the hardware architecture of the system illustrated by Figure 2.

To this end, the system has the hardware architecture of a computer. As shown in Figure 3, the system comprises a processor 1. Although illustrated as a single processor 1, two or more processors can be used according to particular needs, desires, or particular implementations of the system. Generally, the processor 1 executes instructions and manipulates data to perform the operations of the system and any algorithms, methods, functions, processes, flows, and procedures as described in the present disclosure.

The system also comprises communication means 5 which are used by the system for communicating with another electronic device that is communicatively linked to that system 1000, for example for connecting the database 400. Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated system.

Although illustrated as a single communication means 5 in Figure 3, two or more communication means can be used according to particular needs, desires, or particular implementations of the system. The system also comprises a random-access memory 2, a read-only memory 3, and a non-volatile memory 4.

The non-volatile memory 4 of the system stores the first neural network 100 implementing the functions *f*_{*cr*1} and *f*_{*gf*1} and the second neural network 200 implementing the functions *f*_{*cr*2} and *f*_{df2}. The non-volatile memory 4 of the system also constitutes a recording medium conforming to the invention, which is readable by processor 1 and on which is recorded a computer program PROG conforming to the invention, containing instructions for carrying out the steps of the method for training a first neural network according to the invention. The program PROG defines functional modules of the system, which are based on or control the aforementioned elements 1 to 5 of the system, and which comprise in particular a first module including the first neural network 100, a second module including the second neural network 200 and a training module configured to jointly train the first neural network and the second neural network. The joint training is applied by setting shared weights of the first and the second neural networks, so as to minimize a final optimization loss consisting in a sum of the loss *L_{λMSEi}* and a consistency loss *L*_{con}.

The different functional modules described above can be part of a single electronic device or can be distributed in a plurality of electronic devices belonging to that system 1000.

**Figure 4** is a flowchart of a training method according to a particular implementation of the invention in which a first and a second neural networks are jointly trained. It is to be noted that in another implementation only one neural network is trained. In this other implementation only steps S100 to S140 are executed.

As shown on Figure 4, the method for training a first neural network 100 to determine a 3D representation of a scene comprises a first step S100 of inputting a first image *I*₁ of a scene.

In a step S110, a first set of parameters *F*₁ ∈ *R*^{*h×w*×*C*1×*B*} pertaining to the pixels of the first image is determined by the first neural network 100. Based on this first set of parameters *F*₁, the first neural network 100 determine the representation *C*₁ ∈ *R*^{*H×W×*2} of the camera Cam1 used to acquire the first image *I*₁.

Since the camera Cam1 is presented as a pinhole camera which intrinsic parameters are the focal length (*fₓ, f_{y}*)and the principal point (*cₓ, c_{y}*)*.* These four parameters are projected to scalar values, i.e., *Δfₓ, Δf_{y}, Δcₓ, Δc_{y}.* However, they do not directly represent the camera Cam1 intrinsic parameters, but the multiplicative residuals to a pinhole camera initialization, namely $\frac{H}{2}$ for y-components and $\frac{W}{2}$ for x-components, leading to ${f}_{x} = \frac{{Δf}_{x} W}{2} , {f}_{y} = \frac{{Δf}_{y} H}{2} , {c}_{x} = \frac{{Δc}_{x} W}{2} , {c}_{y} = \frac{{Δc}_{y} H}{2}$.

Subsequently, a back-projection operation based on these parameters *fₓ, f_{y}, cₓ,c_{y}* is applied to the coordinates of every pixel of the first image *I*₁ in the pixel coordinates system to determine rays corresponding to each pixel of the first image *I*₁.

The rays of an image are defined as (*r*₁, *r*₂, *r*₃) *= K*⁻¹, where *K* is the calibration matrix of the camera used to acquire the image, the coefficient of *K* being defined based on *Δfₓ, Δf_{y}, Δcₓ,Δc_{y}, u* and *v* are pixel positions in pixel coordinates, and 1 is a vector of ones. Consequently, the homogeneous camera rays (*rₓ, r_{y}*) correspond to ( $\frac{{r}_{1}}{{r}_{3}} , \frac{{r}_{2}}{{r}_{3}}$).

Once the rays corresponding to each pixel of the first image *I*₁ are determined, they are normalized as vectors on a unit sphere. Azimuth *θ* and elevation *φ* values are then extracted from the back-projected rays, effectively generating the representation *C*₁ ∈ *R*^{*H*×*W*×2} of the camera Cam1.

This representation *C*₁ of the camera Cam1 then undergoes, in a step S120, a Laplace Spherical Harmonic Encoding (SHE) delivering a tensor *E*₁ ∈ *R*^{*H*×*W*×*d*} where d is the number of harmonics of the SHE. In other words: *E*₁ = *SHE*(*C*₁), *E*₁ ∈ *R*^{*H*×*W*×}*^{d}.*

The function *SHE*(*·*) computes the set of spherical harmonics, i.e., {*Y*}*_{l,m}* with degree *l* and order m, and concatenating along the channel dimension, with ${Y}_{m}^{l}$ as ${Y}_{m}^{l} \left(θ, ϕ\right) = {α}_{m}^{l} {P}_{m}^{l} \left(cos θ\right) {e}^{imϕ} ,$ where ${P}_{m}^{l}$ is the associated Legendre polynomial of degree *l* and order m, and ${α}_{m}^{l}$ is a normalizing constant. In particular, the spherical harmonics on a unit sphere form an orthogonal basis of the spherical manifold and preserve inner products. The total number of harmonics utilized may be 81, resulting from capping the degree *l* to 8. Of course, the number of harmonics *d* is not limited to 81, its value can go from 10 to a few hundreds. The number of harmonics is selected as a compromise between the computational complexity and the desired accuracy of the 3D representation of the scene generated by the first neural network.

The tensor *E*₁ is then used by the first neural network 100 to determine a camera-conditioned depth feature map *D*₁|*E*₁ ∈ *R*^{*h*×*w*×*C*1} of the scene in a step S130.

The camera-conditioned depth feature map *D*₁|*E*₁ of the scene is defined as: $\left.{D}_{1}\right| {E}_{1} = MLP \left(CA\left({D}_{1}, {E}_{1}\right)\right)$ where (*h, w*) *=* (*H*/16, *W*/16), CA is a cross-attention block and MLP is a MultiLayer Perceptron with at least one hidden layer and *D*₁ ∈ *R*^{*h*×*w*×*C*} is an initialisation depth map. In an example, the hidden layer is a 4*C*-channel hidden layer. It is to be noted that other types of hidden layer can be used instead of a 4*C*-channel hidden layer.

The conditioning between *D*₁ and the camera embeddings *E*₁ is enforced via a cross-attention layer.

More particularly, the initialisation depth map *D*₁ is obtained by inputting an initial latent features tensor *L* ∈ *R*^{*h×w×C*1} in the cross-attention layer. The latent feature tensor *L* is obtained as the average of the first set of parameters *F*₁ ∈ *R*^{*h*×*w×C*1×*B*} along the *B* dimension. The query Q of the cross-attention layer depends on Lwhile the keys K and values V of the cross-attention layer depend on the camera embeddings *E*₁. Then, camera-conditioned depth feature map *D*₁|*E*₁ is processed via self-attention layers where a positional encoding utilized is *E*₁ and upsampled to produce a multi-scale output. The log-depth prediction *Z*_{log1} ∈ R^{*H*×*W*×1} corresponds to the mean of the interpolated intermediate representations.

Then, in a step S140, a final 3D representation *O*₁ is determined by concatenating *C*₁ and *Z*_{log1}.

The first neural network is trained to determine a final 3D representation *O*₁ where the depth is given in meter by minimizing a loss ${L}_{λMSE 1} \left(ε\right) = {\left‖V\left[ε\right]\right‖}_{1} + {λ}^{T} \left(E\left[ε\right]⊙E\left[ε\right]\right)$ *,*
where $ε = {O}_{1} - o * ∈ {ℝ}^{3}$, *O*₁ being the final 3D representation of the scene predicted by the first neural network 100, $o * = \left(θ*,ϕ*,{z}_{log}^{∗}\right)$ is the ground truth 3D representation value of the scene, and *λ =* (*λ_{θ}, λ_{ϕ}, λ_{z}*) ∈ *R*³ is a vector of weights for each dimension of the 3D representation of the scene, *V*[*ε*] and *E*[*ε*] are computed as the vectors of empirical variances and means for each of the three dimensions *θ*, *φ*, *z_{log}* over all the pixels of the image, i.e. ${\left\{{ε}^{\left(i\right)}\right\}}_{i = 1}^{N}$.

As the first neural networks 100 executes steps S100 to S140, the second neural network 200 executes steps S200 to S240.

Thus, in a first step S200 a second image *I*₂ of the scene is input to the second neural network 200.

In a step S210, a second set of parameters *F*₂ ∈ *R*^{*h*×*w*×*C*2×*B*} pertaining to the pixels of the second image is determined by the second neural network 200. Based on this second set of parameters *F*₂, the second neural network 200 determine the representation *C₂* ∈ *R*^{*H*×*W*×*2*}of the camera Cam2 used to acquire the second image *I*₂.

A back-projection operation based on parameters *Δfₓ, Δf_{y}, Δcₓ,Δc_{y}* representing the second camera Cam2 is applied to the coordinates of every pixel of the second image *I*₂ in the pixel coordinates system to determine rays corresponding to each pixel of the second image *I*₂.

Once the rays corresponding to each pixel of the second image *I*₂ are determined, they are normalized as vectors on a unit sphere. Azimuth *θ* and elevation *φ* values are then extracted from the back-projected rays, effectively generating the representation *C₂* ∈ *R*^{*H*×W×*2*}of the camera Cam2.

This representation *C*₂ of the camera Cam2 then undergoes, in a step S220, a Laplace Spherical Harmonic Encoding (SHE) delivering a tensor *E*₂ ∈ *R*^{*H*×*W*×*d*} where *d* is the number of harmonics of the SHE. In other words: *E*₂ = *SHE*(*C*₂), *E₂* ∈ *R*^{*H*×*W*×*d*}.

The function *SHE*(*·*) computes the set of spherical harmonics, i.e., {*Y*}_{*l*,*m*} with degree *l* and order *m*, and concatenating along the channel dimension, with ${Y}_{m}^{l}$ as ${Y}_{m}^{l} \left(θ, ϕ\right) = {α}_{m}^{l} {P}_{m}^{l} \left(cos θ\right) {e}^{imϕ} ,$ where ${P}_{m}^{l}$ is the associated Legendre polynomial of degree *l* and order m, and ${α}_{m}^{l}$ is a normalizing constant. In particular, the spherical harmonics on a unit sphere form an orthogonal basis of the spherical manifold and preserve inner products. The total number of harmonics utilized may be 81, resulting from capping the degree *l* to 8.

The tensor *E*₂ is then used by the second neural network 200 to determine a camera-conditioned depth feature map *D*₂|*E*₂ ∈ *R*^{*h*×w×*C*1} of the scene in a step S230.

The camera-conditioned depth feature map *D*₂|*E*₂ of the scene is defined as: $\left.{D}_{2}\right| {E}_{2} = MLP \left(CA\left({D}_{2}, {E}_{2}\right)\right)$ where (*h, w*) = (*H*/16, *W*/16), CA is a cross-attention block and MLP is a MultiLayer Perceptron with at least one hidden layer and *D*₂ ∈ *R*^{*h*×*w*×*C*} is an initialisation depth map.

The conditioning between *D*₂ and the camera embeddings *E*₂ is enforced via a cross-attention layer.

More particularly, the initialisation depth map *D*₂ is obtained by inputting an initial latent features tensor *L* ∈ *R*^{*h×w×C*1} in the cross-attention layer. The latent feature tensor *L* is obtained as the average of the first set of parameters *F*₂ ∈ *R*^{*h*×*w*×*C*1×*B*} along the *B* dimension. The query Q of the cross-attention layer depends on Lwhile the keys K and values V of the cross-attention layer depend on the camera embeddings *E*₂. Then, camera-conditioned depth feature map *D*₂|*E*₂ is processed via self-attention layers where a positional encoding utilized is *E*₂ and upsampled to produce a multi-scale output. The log-depth prediction *Z*_{log2} ∈ *R*^{*H*×*W*×1} corresponds to the mean of the interpolated intermediate representations.

Then, in a step S240, a final 3D representation *O*₂ is determined by concatenating *C*₂ and Z_{log2}.

The second neural network 200 is trained to determine a final 3D representation *O*₂ where the depth is given in meter by minimizing a loss ${L}_{λMSE 2} \left(ε\right) = {\left‖V\left[ε\right]\right‖}_{1} + {λ}^{T} \left(E\left[ε\right]⊙E\left[ε\right]\right)$ *,*
where $ε = {O}_{2} - o * ∈ {ℝ}^{3}$, *O*₂ being the final 3D representation of the scene predicted by the second neural network 200, $o * = \left(θ*,ϕ*,{z}_{log}^{∗}\right)$ is the ground truth 3D representation value of the scene, and *λ =* (*λ_{θ}, λ_{ϕ}, λ_{z}*) ∈ *R*³ is a vector of weights for each dimension of the 3D representation of the scene, *V*[*ε*] and *E*[*ε*] are computed as the vectors of empirical variances and means for each of the three dimensions *θ*, *φ*, *z_{log}* over all the pixels of the image, i.e. ${\left\{{ε}^{\left(i\right)}\right\}}_{i = 1}^{N}$.

The method for training a neural network further comprises a step S300 comprising sub-steps 310 to 350 executed after steps S140 and S240, of minimizing a loss function given by: $L = {L}_{λMSEi} + {αL}_{con} ,$ where *α* is a weight and *L*_{con} is a consistency loss given by: ${L}_{con} \left(\left.{D}_{1}\right|{E}_{1},\left.{D}_{2}\right|{E}_{2}\right) = {\left‖{T}_{2}∘{T}_{1}^{- 1}∘\left(\left.{D}_{1}\right|{E}_{1}\right)-sg\left(\left.{D}_{2}\right|{E}_{2}\right)\right‖}_{1} ,$ where *sg*(·) corresponds to the stop-gradient detach operation enabling to exploit the second camera-conditioned depth feature map *D*₂|*E*₂ as a pseudo ground truth, and *Tᵢ* corresponds to the geometrical transformation applied to image *i.* For example, *α* has a value of 0.1. Of course, other values of *α* can be considered depending on the significance one wishes to attribute to *L*_{con}.

The spatial locations from a same scene captured by different cameras should correspond when the neural network is conditioned on one of the cameras used to acquired images of the scene. In other words, if the scene represents an armchair, the spatial locations corresponding for example to the back of the armchair or to an armchair, should be similar from one image to another. To this end, a geometric invariance, or consistency loss, *L*_{con} is used to enforce the consistency of the first and the second camera-conditioned depth feature maps predicted respectively by the first and the second neural networks. More particularly, consistency is enforced on features extracted from identical locations in the original image.

It is to be noted that if *λ_{d}* = 1 for a dimension *d*, the loss represents the standard MSE loss *L_{λMSE}* for that dimension. If *λ_{d}* < 1, a scale-invariant loss term is added to that dimension if it is expressed in log space, e.g. for the depth dimension z_{log} and a shift-invariant loss term is added if that output is expressed in linear space. More particularly, if only the last output dimension is considered, i.e., the one corresponding to depth, and *λ_{z}* = 0.15 is utilized, the corresponding loss is the standard *SI_{log}.* In an example, we set *λ_{θ}* = *λ_{ϕ}* = 1 and *λ_{z}* = 0.15.

Thus, in a sub-step S310, the first neural network 100 transmits *L*_{*λMS1E*1} to the joint training module 300.

In a sub-step S320, the second neural network 200 transmits *L_{λMSE2}* to the joint training module 300.

At some point after the execution of step S130, the first neural network 100 transmits, in a sub-step S330, the camera-conditioned depth feature map *D*₁|*E*₁ of the scene to the joint training module 300.

In the same way, at some point after the execution of sub-step S330, the second neural network 200 transmits, in a sub-step S340, the camera-conditioned depth feature map *D*₂|*E*₂of the scene to the joint training module 300.

As a result, the joint training module 300can compute *L*_{con} in a sub-step S350.

In a particular implementation, ${L}_{con} \left(\left.{D}_{1}\right|{E}_{1},\left.{D}_{2}\right|{E}_{2}\right) = \frac{1}{2} \left({L}_{con}\left(\left.{D}_{1}\right|{E}_{1},\left.{D}_{2}\right|{E}_{2}\right)+{L}_{con}\left(\left.{D}_{2}\right|{E}_{2},\left.{D}_{1}\right|{E}_{1}\right)\right)$ . In this implementation, the geometric invariance loss *L*_{con} is bidirectional.

The features *L_{λMSEi}* and *L*_{con} are then used to generate the final optimization loss *L = L_{λMSEi}* + α*L*_{con}. Minimizing the function *L* encourages each neural network to adapt the sets of parameters *Fᵢ* ∈*R*^{*h*×w×*C*×*B*} so that the 3D representation of the scene generated by a neural network gets more and more similar to the ground truth 3D representation of the scene.

In particular implementations where the neural networks comprise an encoder configured for generating the sets of parameters *Fᵢ* ∈ *R^{h×w×Ci×B}* from an image *Iᵢ*, the step of minimizing the final optimization loss L encourages the encoder to generate sets of parameters *Fᵢ* ∈ *R^{h×w×Ci×B}* so that the 3D representation of the scene generated by a neural network gets more and more similar to the ground truth 3D representation of the scene.

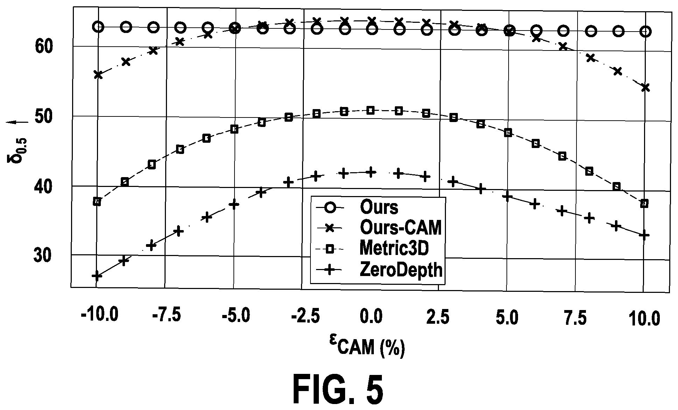

**Figure 5** illustrates the impact of noise on the representation *Cᵢ*of the camera Cami. As one can see on figure 5, in high-noise intrinsic parameters or camera-agnostic scenarios, since the present invention relies on bootstrapping representation *Cᵢ*of the camera Cami in order to determine a camera-conditioned depth feature map, the total noise insensitivity is displayed. In some implementations, it possible to substitute the representation *Cᵢ* of the camera Cami to improve the 3D reconstruction peak performance by an external dense camera representation. This adaptability enhances the invention's versatility, allowing it to operate seamlessly in diverse setups.

In an example embodiment, the first and the second neural networks 100, 200 comprise an Encoder Backbone, a Camera Module, executing steps S110 to S120 for the first neural network 100 and S210 to S220 for the second neural network 200, and a Depth Module, executing step S130 for the first neural network 100 and S230 for the second neural network 200. The encoder can be either convolutional or ViT based, producing features at different "scales", i.e. *Fᵢ* ∈ *R*^{*h*×*w*×*C*×}*^{B},* where $\left(h, w\right) = \left(\frac{H}{16}, \frac{W}{16}\right)$ and *B* = 4.

The Camera Module parameters are initialized class tokens for ViT-style or pooled feature maps for convolutional style backbones. The encoded features *Fᵢ* from the Encoder Backbone are passed to the Camera Module as a stack of detached tokens, the encoder class tokens are utilized as camera parameters initialization. The features are processed *Fᵢ* to obtain the final dense representation *Cᵢ* as detailed in reference to figure 4, of the low variety of effective cameras compared to the image diversity. In fact, the Camera Module component easily overfits and clearly dominates the overall backbone gradient.

The Depth Module is fed with the encoder features to condition the initial latent features *L* via one cross-attention layer to obtain the initial depth features, *Dᵢ.* Furthermore, the depth features are conditioned on *Eᵢ* to obtain *Dᵢ*|*Eᵢ* as described in reference to figure 4. The camera-prompted depth features are further processed via self-attention layers where the positional encoding utilized is *Eᵢ* and upsampled to produce a multi-scale output.

Table 1 and table 2 represent the results on the benchmark NYU and KITTI Eigen-split. The neural network trained according to the invention sets the state of the art in these two benchmarks despite being compared with models trained on the same domain. Importantly, the KITTI Depth Prediction Benchmark, which provides a perfectly fair evaluation, underscores the excellent zero-shot performance of the neural network trained according to the invention and its robustness compared to the known MDE methods, as the neural network trained according to the invention ranks first on this benchmark at the time of submission, with a 15.5% improvement in *SI*_{log} over the second-best method. Performance disparities are not solely attributed to dataset characteristics, as observed in the comparison with Metric3D and ZeroDepth. Despite being trained on a smaller dataset, the neural network trained according to the invention outperforms both of these methods. In particular, the neural network trained according to the invention improves in δ₁ over Metric3D and ZeroDepth by 5.8% and 7.3%, respectively, on NYU (Table 2) and by 1.1% and 9.4%, respectively, on KITTI (Table 3).

**Table 1**

| Method | δ_{0.5} | | | A.Re 1 | *RMSRMS_{log}* | | | *SI*_{log} |
|---|---|---|---|---|---|---|---|---|
| | Higher is better | | | | Lower is better | | | |
| BTS [24] | 66.1 | 88.5 | 74.0 | 10.9 | 0.391 | 0.141 | 0.160 | 11.5 |
| AdaBins [2] | 68.1 | 90.1 | 74.7 | 10.3 | 0.365 | 0.131 | 0.156 | 10.6 |
| NeWCRF [50] | 69.6 | 92.1 | 75.8 | 9.56 | 0.333 | 0.119 | 0.147 | 9.16 |
| iDisc [34] | 74.5 | 93.8 | 78.2 | 8.61 | 0.313 | 0.110 | 0.133 | 8.85 |
| ZoeDepth ^{†} [3] | 78.4 | 95.2 | 80.1 | 7.70 | 0.278 | 0.097 | 0.125 | 7.19 |
| ZeroDepth [20] | - | 90.1 | - | 10.0 | 0.380 | - | - | - |
| Metric3D [48] | 76.3 | 92.6 | 77.8 | 9.38 | 0.337 | 0.120 | 0.146 | 9.13 |
| UniDepth-C | 85.4 | 97.2 | 84.3 | 6.26 | 0.232 | 0.082 | 0.101 | 6.41 |
| UniDepth-V | 88.6 | 98.4 | 85.9 | 5.78 | 0.201 | 0.073 | 0.092 | 5.27 |

**Table 2**

| Method | δ_{0.5} | | _{*δ*1} | | | | | *F*_{log} |
|---|---|---|---|---|---|---|---|---|
| | Higher is better | | Lower is better | | | | | |
| BTS [24] | 86.9 | 96.2 | 82.0 | 5.63 | 2.43 | 0.089 | 0.42 | 8.18 |
| AdaBins [2] | 86.2 | 96.3 | 81.5 | 5.85 | 2.38 | 0.089 | 0.429 | 8.10 |
| NeWCRF [50] | 88.9 | 97.5 | 82.7 | 5.20 | 2.07 | 0.078 | 0.388 | 7.00 |
| iDisc [34] | 89.2 | 97.5 | 83.1 | 5.09 | 2.07 | 0.077 | 0.380 | 7.11 |
| ZoeDepth ^{†}[3] | 87.4 | 96.5 | 82.1 | 5.76 | 2.39 | 0.089 | 0.431 | 7.47 |
| ZeroDepth [20] - | - | 89.2 | | 10.2 | 4.38 | 0.196 | - | - |
| Metric3D [48] | 88.9 | 97.5 | 82.9 | 5.33 | 2.26 | 0.081 | 0.392 | 7.28 |
| UniDepth-C | 91.1 | 97.9 | 83.9 | 4.69 | 2.00 | 0.072 | 0.371 | 6.71 |
| UniDepth-V | 93.4 | 98.6 | 85.0 | 4.21 | 1.75 | 0.064 | 0.338 | 5.84 |

**Table 3**

| Ablati on | In-Domain | | | | | Out-of-Domain | | | |
|---|---|---|---|---|---|---|---|---|---|
| | | *δ*₁ ↑ | *SI*_{*log*↓} ↓ | *F_{A}* ↑ | *ARel_{C}* ↓ | *δ*₁ ↑ | *SI*_{*log*↓} ↓ | *F_{A}* ↑ | *ARel_{C}* ↓ |
| 1 | Oracle ^{†} | 89.06 ± 0.03 | 13.15 ± 0.02 | 65.45 ± 0.13 | *n*/*a* | 68.11 ± 0.17 | 14.78 ± 0.01 | 57.17 ± 0.09 | *n*/*a* |
| 2 | Full Camera ^{†} | 88.89 ± 0.10 | 13.13 ± 0.01 | 63.52 ± 0.08 | 2.05 ± 0.01 | 57.06 ± 1.48 | 14.83 ± 0.04 | 49.71 ± 0.55 | 13.54 ± 0.85 |
| 3 | 87.42 ± 0.04 | 13.49 ± 0.08 | 63.78 ± 0.02 | *n*/*a* | 48.38 ± 0.97 | 15.55 ± 0.15 | 45.21 ± 0.86 | *n*/*a* | |
| 4 | Spheric al | 61.30 ± 1.00 | 19.36 ± 0.09 | 17.89 ± 0.11 | 48.29 + 4.03 | 37.09 ± 1.37 | 22.49 ± 0.16 | 21.78 ± 0.14 | 87.51 ± 11.1 |
| 5 | -*L*_{con} | 88.53 ± 0.07 | 13.24 ± 0.01 | 60.89 ± 0.15 | 2.65 ± 0.06 | 52.89 ± 0.21 | 14.85 ± 0.01 | 45.17 ± 0.32 | 14.27 ± 0.41 |
| 6 | - Dense | 87.62 ± 0.11 | 13.41 ± 0.05 | 61.33 ± 0.54 | 1.91 ± 0.04 | 55.65 ± 0.18 | 15.04 ± 0.04 | 43.19 ± 0.24 | 16.61 ± 0.41 |
| 7 | - Detach | 88.16 ± 0.12 | 13.48 ± 0.06 | 64.19 ± 0.17 | 0.93 ± 0.02 | 46.60 ± 0.25 | 15.26 ± 0.10 | 43.85 ± 2.01 | 18.99 ± 1.00 |
| 8 | Baselin e | 77.36 ± 0.22 | 21.17 ± 0.28 | 16.29 ± 0.26 | *n*/*a* | 48.19 ± 1.02 | 23.05 ± 0.45 | 14.29 ± 0.36 | *n*/*a* |
| 9 | Baselin e++ | 82.41 ± 0.13 | 16.31 ± 0.05 | 41.98 ± 0.12 | *n*/*a* | 51.22 ± 0.35 | 18.14 ± 0.05 | 38.27 ± 0.02 | *n*/*a* |

In Table 3, row 3, the benefit of the Camera Module becomes apparent, revealing a substantial disparity in the effect of this module on scale-invariant and scale-dependent metrics for in- and out-of-domain testing. This disparity stems from the absence of prior knowledge of the model regarding scale, impeding its optimal utilization of the diverse training set. Concentrating solely on predicting depth, rather than a complete 3D output, proves advantageous in averting convergence issues during training. This is evident in comparison with methods predicting 3D representations, either without reliance on camera information (rows 8 and 9) or influenced by intertwined optimization (row 4), as elucidated in Sec. 3. Refraining from relying on the camera also constrains the model's capacity to recover a multimodal distribution for out-of-domain samples. The lack of a (bootstrapped) prior prevents the depth module from serving as a corrective mechanism based on an initial scale estimation and imposes an unnecessary computational burden, i.e. recovering the depth values from scratch. This limitation is underscored by the marked variability observed for test sets strongly out-of-distribution, such as KITTI, when comparing the utilization or absence of camera information (rows 2 and 3, respectively). In particular, "Full" achieves 95.2% in *δ*₁ in KITTI, while "-Camera" obtains 58.9% for the same test set, despite a mere 2% difference between the two versions on nuScenes and DDAD.

All ablations employ the same loss *L_{λMSE},* but across different output spaces. In row 4, a Cartesian output space is used instead of a pseudo-spherical as on the invention, which results in substantially inferior performance due to the respective intertwined formulation of camera and depth output spaces. The Baseline (row 8) also employs a Cartesian representation, but the negative impact of this choice is less pronounced in this model because of the absence of a camera module. More specifically, the decoder of Baseline is not conditioned on inaccurate prior camera and scale information as in row 4. Moreover, row 9 corresponds to Baseline with pseudo-spherical representation. Comparison between row 8 and row 9 shows that when predicting directly the 3D representation of the scene, the choice of the output representation is still relevant in defining a better internal representation and optimization. Row 5 demonstrates the positive impact of the geometric invariance loss *L*_{con}. This loss *L*_{con} contributes to enhanced in-domain and out-of-domain performance by promoting the invariance of depth features to appearance variations owing to different camera intrinsic parameters. Furthermore, stopping the gradient from propagating from the Camera Module to the Encoder (row 7), as described in reference to figure 4, proves particularly beneficial in avoiding scale and camera overfitting in zero-shot testing, and stabilizes the dominant effect that camera supervision has on the gradient of the Encoder weights compared to depth supervision.

In row 6, the model incorporates a sparse camera representation, specifically the pinhole camera model with (*fₓ, f_{y}, cₓ, c_{y}*), leading to sparse camera prompting and scalar supervision; the camera module still predicts the residual components as outlined in reference to figure 4. This approach hurts generalization, as evidenced by *ARel_{C}* in the out-of-domain evaluation, despite the slight improvement in in-domain *ARel_{C}.* It is speculated that the four prompts convey less robust information to the depth module than their dense counterpart, resulting in inferior performance for depth metrics compared to Full for both in- and out-of-domain.

## Claims

1. A computer implemented method for training a first neural network for generating a three-dimensional (3D) representation of a scene, the method comprising:
- inputting a first image of the scene acquired by a first camera to the first neural network, said first neural network being configured to determine a first 3D representation of the scene based on:
- a representation of the first camera determined by the first neural network from said first image, said representation of the first camera being a tensor *C* ∈ *R*^{*H*×*W*×*2*} where *H* and *W* are respectively the height and width of the image acquired by the first camera, and the last dimension corresponding to a first azimuth *θ* and a first elevation *φ*, and
- a first camera-conditioned depth feature map of the scene determined by the first neural network by computing a Laplace Spherical Harmonic Encoding (SHE) *E* ∈ *R*^{*H*×*W*×*d*} of said tensor *C* where *d* is the number of harmonics of the SHE;
- minimizing a loss *L*_{*λMSE*1} which is a difference between said first 3D representation of the scene and a ground truth 3D representation of the scene.

2. The training method according to claim 1 further comprising:
- inputting at least a second image of the scene acquired by a second camera to at least a second neural network, said second neural network being configured to determine a second 3D representation of the scene based on
- a representation of the second camera determined by the second neural network from said second image, said representation of the second camera being a tensor *C* ∈ *R*^{*H×W×*2} where *H* and *W* are respectively the height and width of the image acquired by the second camera, and the last dimension corresponding to a first azimuth *θ* and a first elevation *φ*, and
- a second camera-conditioned depth feature map of the scene determined by the second neural network by computing a Laplace Spherical Harmonic Encoding (SHE) *E* ∈ *R*^{*H*×*W*×*d*} of said tensor *C* where *d* is the number of harmonics of the SHE
- minimizing a loss *L*_{*λMSE*2} which is a difference between said second 3D representation of the scene and the ground truth 3D representation of the scene; and
- jointly training the first and second neural networks by minimizing a final optimization loss consisting in a sum of the loss *L_{λMSEi}* and a consistency loss *L*_{con}.

3. The training method according to claim 1 or claim 2 wherein determining the 3D representation of the scene comprises determining for each pixel of the first image, in a spherical coordinate system of the first camera, a second azimuth *θ*, a second elevation *φ* and a logarithmic depth *z_{log}.*

4. The training method according to any of claim 2 to claim 3 wherein the second image is obtained by applying a geometrical transformation to the first image.

5. The training method according to claim 4 wherein the geometrical transformation is a resizing and/or a mirroring and/or a translation of the first image.

6. The training method according to any of claims 1to 5 wherein a camera-conditioned depth feature map *D*|*E* ∈ R^{*h*×*w*×*C*}of the scene is defined as: $\left.D\right| E = MLP \left(CA\left(D, E\right)\right)$ where *(h, w) = (H*/*x, W*/*x),* where x represents a computational parameter, CA is a cross-attention block and MLP is a Multi-Layer Perceptron with at least one hidden layer and *D* ∈ *R*^{*h*×*w*×*C*} is an initialisation depth map.

7. The training method according to any of claim 2 to 6 wherein the consistency loss is a difference between the first camera-conditioned depth feature map and the second camera-conditioned depth feature map that have been previously aligned with each other.

8. A neural network trained by the method according to any one of claims 1 to 7.

9. A system for training a first neural network for generating a three-dimensional (3D) representation of a scene when an image of the scene is inputted to the first neural network, the system comprising:
- a first neural network being configured to:
- obtain a first image of the scene acquired by a first camera;
- determine a first 3D representation of the scene based on a representation of the first camera determined by the first neural network from said first image, said representation of the first camera being a tensor *C* ∈ *R*^{*H*×*W*×2} where *H* and *W* are respectively the height and width of the image acquired by the first camera, and the last dimension corresponding to a first azimuth *θ* and a first elevation *φ*, and a first camera-conditioned depth feature map of the scene determined by the first neural network by computing a Laplace Spherical Harmonic Encoding (SHE) *E* ∈ *R*^{*H*×*W*×*d*} of said tensor *C* where *d* is the number of harmonics of the SHE;
- a first training module configure to minimize a loss *L*_{*λMSE*1} which is a difference between said first 3D representation of the scene and a ground truth 3D representation of the scene.

10. The system for training a first neural network according to claim 9 further comprising:
- a second neural network configured to:
- obtain a second image of the scene acquired by a second camera;
- determine a second 3D representation of the scene based on a representation of the second camera determined by the second neural network from said second image, said representation of the second camera being a tensor *C* ∈ *R*^{*H*×*W*×2} where *H* and *W* are respectively the height and width of the image acquired by the second camera, and the last dimension corresponding to a first azimuth *θ* and a first elevation *φ*, and a second camera-conditioned depth feature map of the scene determined by the second neural network by computing a Laplace Spherical Harmonic Encoding (SHE) *E* ∈ *R*^{*H*×*W*×*d*} of said tensor *C* where *d* is the number of harmonics of the SHE;
- a second training module configured to minimize a loss *L*_{*λMSE*2} which is a difference between said second 3D representation of the scene and the ground truth 3D representation of the scene;
- a third training module configured to jointly train the first neural network and the second neural network by minimizing a final optimization loss consisting of a sum of the loss *L_{λMSE}* and a consistency loss *L*_{con} ..

11. A system comprising the neural network according to claim 8.

12. A vehicle comprising the system according to claim 11.

13. A computer program including instructions for executing the method according to any one of the claims 1 to 7 when executed by a computer.

14. A recording medium readable by a computer and having recorded thereon a computer program including instructions for executing the method according to any one of the claims 1 to 7 when executed by a computer.

## Patentansprüche

1. Computerimplementiertes Verfahren zum Trainieren eines ersten neuronalen Netzwerks zum Erzeugen einer dreidimensionalen (3D) Repräsentation einer Szene, wobei das Verfahren Folgendes umfasst:
- Eingeben eines ersten Bildes der Szene, das von einer ersten Kamera erfasst wurde, in das erste neuronale Netzwerk, wobei das erste neuronale Netzwerk dazu ausgelegt ist, eine erste 3D-Repräsentation der Szene auf Basis von Folgendem zu bestimmen:
- einer Repräsentation der ersten Kamera, die durch das erste neuronale Netzwerk anhand des ersten Bildes bestimmt wurde, wobei die Repräsentation der ersten Kamera ein Tensor *C* ∈ *R*^{*H*xW*x*2} ist, wo *H* und *W* die Höhe bzw. die Breite des von der ersten Kamera erfassten Bildes sind und wobei die letzte Dimension einem ersten Azimut *θ* und einer ersten Elevation *φ* entspricht, und
- einer ersten kamerakonditionierten Tiefenmerkmalskarte der vom ersten neuronalen Netzwerk durch Berechnen einer sphärischen harmonischen Laplace-Codierung (SHE) *E* ∈ R^{*HxW*xd} des Tensors *C* bestimmten Szene, wo *d* die Anzahl von Oberschwingungen der SHE ist;
- Minimieren eines Verlustes *L*_{*λMSE*1}, der eine Differenz zwischen der ersten 3D-Repräsentation der Szene und einer Bodenwahrheit-3D-Repräsentation der Szene ist.

2. Trainingsverfahren nach Anspruch 1, das ferner Folgendes umfasst:
- Eingeben von mindestens einem zweiten Bild der Szene, das von einer zweiten Kamera erfasst wurde, in mindestens ein zweites neuronales Netzwerk, wobei das zweite neuronale Netzwerk dazu ausgelegt ist, eine zweite 3D-Repräsentation der Szene auf Basis von Folgendem zu bestimmen
- einer Repräsentation der zweiten Kamera, die durch das zweite neuronale Netzwerk anhand des zweiten Bildes bestimmt wurde, wobei die Repräsentation der zweiten Kamera ein Tensor *C* ∈ *R*^{*H*xW*x*2} ist, wo *H* und *W* die Höhe bzw. die Breite des von der zweiten Kamera erfassten Bildes sind und wobei die letzte Dimension einem ersten Azimut *θ* und einer ersten Elevation *φ* entspricht, und
- einer zweiten kamerakonditionierten Tiefenmerkmalskarte der vom zweiten neuronalen Netzwerk durch Berechnen einer sphärischen harmonischen Laplace-Codierung (SHE) *E* ∈ R^{*HxW*xd} des Tensors *C* bestimmten Szene, wo *d* die Anzahl von Oberschwingungen der SHE ist;
- Minimieren eines Verlustes *L*_{*λMSE*2}, der eine Differenz zwischen der zweiten 3D-Repräsentation der Szene und der Bodenwahrheit-3D-Repräsentation der Szene ist; und
- gemeinsames Trainieren des ersten und des zweiten neuronalen Netzwerks durch Minimieren eines abschließenden Optimierungsverlusts, der aus einer Summe des Verlustes *L*_{*λMSE*i} und einem Konsistenzverlust *L*_{con} besteht.

3. Trainingsverfahren nach Anspruch 1 oder Anspruch 2, wobei das Bestimmen der 3D-Repräsentation der Szene das Bestimmen eines zweiten Azimuts *θ*, einer zweiten Elevation *φ* und einer logarithmischen Tiefe *Z_{log}* für jedes Pixel des ersten Bildes in einem sphärischen Koordinatensystem der ersten Kamera umfasst.

4. Trainingsverfahren nach einem von Anspruch 2 bis Anspruch 3, wobei das zweite Bild durch Anwenden einer geometrischen Transformation in das erste Bild erhalten wird.

5. Trainingsverfahren nach Anspruch 4, wobei die geometrische Transformation eine Größenänderung und/oder eine Spiegelung und/oder eine Translation des ersten Bildes ist.

6. Trainingsverfahren nach einem der Ansprüche 1 bis 5, wobei die kamerakonditionierte Tiefenmerkmalskarte D | E ∈ *R^{hxwxC}* der Szene als Folgendes definiert ist:$\left.D\right| E = MLP \left(CA\left(D, E\right)\right)$ wo (*h, w) =* (*H*/ *x, W*/ *x*), wo x einen Berechnungsparameter repräsentiert, CA ein Cross-Attention-Block ist und MLP ein Multilayer-Perzeptron mit mindestens einer verborgenen Schicht ist und D ∈ *R^{hxwxC}* eine Initialisierungstiefenkarte ist.

7. Trainingsverfahren nach einem der Ansprüche 2 bis 6, wobei der Konsistenzverlust eine Differenz zwischen der ersten kamerakonditionierten Tiefenmerkmalskarte und der zweiten kamerakonditionierten Tiefenmerkmalskarte ist, die zuvor aufeinander ausgerichtet wurden.

8. Neuronales Netzwerk, das mit dem Verfahren nach einem der Ansprüche 1 bis 7 trainiert wird.

9. System zum Trainieren eines ersten neuronalen Netzwerks zum Erzeugen einer dreidimensionalen (3D) Repräsentation einer Szene, wenn ein Bild der Szene in das erste neuronale Netzwerk eingegeben wird, wobei das System Folgendes umfasst:
- ein erstes neuronales Netzwerk, das zu Folgendem ausgelegt ist:
- Erhalten eines ersten Bildes der Szene, das von einer ersten Kamera erfasst wurde;
- Bestimmen einer ersten 3D-Repräsentation der Szene auf Basis einer Repräsentation der ersten Kamera, die durch das erste neuronale Netzwerk anhand des ersten Bildes bestimmt wurde, wobei die Repräsentation der ersten Kamera ein Tensor *C* ∈ *R*^{*H*xW*x*2} ist, wo *H* und *W* die Höhe bzw. die Breite des von der ersten Kamera erfassten Bildes sind und wobei die letzte Dimension einem ersten Azimut *θ* und einer ersten Elevation *φ* entspricht, und einer ersten kamerakonditionierten Tiefenmerkmalskarte der vom ersten neuronalen Netzwerk durch Berechnen einer sphärischen harmonischen Laplace-Codierung (SHE) *E* ∈ R^{*HxW*xd} des Tensors *C* bestimmten Szene, wo *d* die Anzahl von Oberschwingungen der SHE ist,
- ein erstes Trainingsmodul, das dazu ausgelegt ist, einen Verlust *L*_{*λMSE*1}, der eine Differenz zwischen der ersten 3D-Repräsentation der Szene und einer Bodenwahrheit-3D-Repräsentation der Szene ist, zu minimieren.

10. System zum Trainieren eines ersten neuronalen Netzwerks nach Anspruch 9, das ferner Folgendes umfasst:
- ein zweites neuronales Netzwerk, das zu Folgendem ausgelegt ist:
- Erhalten eines zweiten Bildes der Szene, das von einer zweiten Kamera erfasst wurde;
- Bestimmen einer zweiten 3D-Repräsentation der Szene auf Basis einer Repräsentation der zweiten Kamera, die durch das zweite neuronale Netzwerk anhand des zweiten Bildes bestimmt wurde, wobei die Repräsentation der zweiten Kamera ein Tensor *C* ∈ *R*^{*H*xW*x*2} ist, wo *H* und *W* die Höhe bzw. die Breite des von der zweiten Kamera erfassten Bildes sind und wobei die letzte Dimension einem ersten Azimut *θ* und einer ersten Elevation *φ* entspricht, und einer zweiten kamerakonditionierten Tiefenmerkmalskarte der vom zweiten neuronalen Netzwerk durch Berechnen einer sphärischen harmonischen Laplace-Codierung (SHE) *E* ∈ R^{*HxW*xd} des Tensors *C* bestimmten Szene, wo *d* die Anzahl von Oberschwingungen der SHE ist,
- ein zweites Trainingsmodul, das dazu ausgelegt ist, einen Verlust *L*_{*λMSE*2}, der eine Differenz zwischen der zweiten 3D-Repräsentation der Szene und der Bodenwahrheit-3D-Repräsentation der Szene ist, zu minimieren;
- ein drittes Trainingsmodul, das dazu ausgelegt ist, das erste neuronale Netzwerk und das zweite neuronale Netzwerk durch Minimieren eines abschließenden Optimierungsverlusts, der aus einer Summe des Verlustes *L_{λMSE}* und einem Konsistenzverlust *L_{con}* besteht, gemeinsam zu trainieren.

11. System, das das neuronale Netzwerk nach Anspruch 8 umfasst.

12. Fahrzeug, das das System nach Anspruch 11 umfasst.

13. Computerprogramm, das Anweisungen zum Ausführen des Verfahrens nach einem der Ansprüche 1 bis 7 umfasst, wenn es von einem Computer ausgeführt wird.

14. Aufzeichnungsmedium, das von einem Computer lesbar ist und auf dem ein Computerprogramm aufgezeichnet ist, das Anweisungen zum Ausführen des Verfahrens nach einem der Ansprüche 1 bis 7 umfasst, wenn es von einem Computer ausgeführt wird.

## Revendications

1. Procédé mis en œuvre par ordinateur destiné à entraîner un premier réseau neuronal pour générer une représentation tridimensionnelle (3D) d'une scène, le procédé comprenant :
- la fourniture d'une première image de la scène acquise par une première caméra en entrée du premier réseau neuronal, ledit premier réseau neuronal étant configuré pour déterminer une première représentation 3D de la scène en se basant sur :
- une représentation de la première caméra déterminée par le premier réseau neuronal à partir de ladite première image, ladite représentation de la première caméra étant un tenseur *C* ∈ *R*^{*H*×*W*×2}, où *H* et *W* sont respectivement la hauteur et la largeur de l'image acquise par la première caméra, et la dernière dimension correspondant à un premier azimut *θ* et à une première élévation *φ,* et
- une première carte de caractéristiques de profondeur de la scène conditionnée par la caméra déterminée par le premier réseau neuronal en calculant un codage harmonique sphérique de Laplace (SHE) *E ∈ R*^{*H*×*w*×*d*} dudit tenseur *C* où *d* est le nombre d'harmoniques du SHE ;
- la minimisation d'une perte *L_{λMSE1}* qui est une différence entre ladite première représentation 3D de la scène et une représentation 3D de référence de la scène.

2. Procédé d'entraînement selon la revendication 1, comprenant en outre :
- la fourniture d'au moins une deuxième image de la scène acquise par une deuxième caméra en entrée d'au moins un deuxième réseau neuronal, ledit deuxième réseau neuronal étant configuré pour déterminer une deuxième représentation 3D de la scène en se basant sur :
- une représentation de la deuxième caméra déterminée par le deuxième réseau neuronal à partir de ladite deuxième image, ladite représentation de la deuxième caméra étant un tenseur *CE R*^{*H*×*W*×*2*} où *H* et *W* sont respectivement la hauteur et la largeur de l'image acquise par la deuxième caméra, et la dernière dimension correspondant à un premier azimut *θ* et à une première élévation *φ,* et
- une deuxième carte de caractéristiques de profondeur de la scène conditionnée par la caméra déterminée par le deuxième réseau neuronal en calculant un codage harmonique sphérique de Laplace (SHE) *E ∈ R*^{*H*×*w*×*d*} dudit tenseur *C* où *d* est le nombre d'harmoniques du SHE ;
- la minimisation d'une perte *L_{λMSE2}* qui est une différence entre ladite deuxième représentation 3D de la scène et la représentation 3D de référence de la scène ; et
- l'entraînement conjoint des premier et deuxième réseaux neuronaux en minimisant une perte d'optimisation finale consistant en une somme de la perte *L_{λMSEi}* et d'une perte de cohérence *L_{con}.*

3. Procédé d'entraînement selon la revendication 1 ou 2, dans lequel la détermination de la représentation 3D de la scène comprend la détermination, pour chaque pixel de la première image dans un système de coordonnées sphérique de la première caméra, d'un deuxième azimut *θ*, d'une deuxième élévation *φ* et d'une profondeur logarithmique *z_{log}.*

4. Procédé d'entraînement selon l'une des revendications 2 à 3, dans lequel la deuxième image est obtenue en appliquant une transformation géométrique à la première image.

5. Procédé d'entraînement selon la revendication 4, dans lequel la transformation géométrique est un redimensionnement et/ou une transformation par symétrie et/ou une translation de la première image.

6. Procédé d'entraînement selon l'une des revendications 1 à 5, dans lequel une carte de caractéristiques de profondeur conditionnée par la caméra *D*|*E ∈ R*^{*h*×*w*×}*^{C} de* la scène est définie comme suit :$\left.D\right| E = MLP \left(CA\left(D, E\right)\right)$ où *(h,w) = (H*/*x, W*/*x),* où *x* représente un paramètre de calcul, *CA* est un bloc d'attention croisée et *MLP* est un perceptron multicouche comportant au moins une couche cachée, et *D ∈ R*^{*h*×*w*×*C*} est une carte de profondeur d'initialisation.

7. Procédé d'entraînement selon l'une des revendications 2 à 6, dans lequel la perte de cohérence est une différence entre la première carte de caractéristiques de profondeur conditionnée par la caméra et la deuxième carte de caractéristiques de profondeur conditionnée par la caméra qui ont été préalablement alignées l'une par rapport à l'autre.

8. Réseau neuronal entraîné par le procédé selon l'une quelconque des revendications 1 à 7.

9. Système destiné à entraîner un premier réseau neuronal pour générer une représentation tridimensionnelle (3D) d'une scène lorsqu'une image de la scène est fournie en entrée du premier réseau neuronal, le système comprenant :
- un premier réseau neuronal configuré pour :
- obtenir une première image de la scène acquise par une première caméra ;
- déterminer une première représentation 3D de la scène en se basant sur une représentation de la première caméra déterminée par le premier réseau neuronal à partir de ladite première image, ladite représentation de la première caméra étant un tenseur *C ∈ R*^{*H*×*W*×}*²,* où *H* et *W* sont respectivement la hauteur et la largeur de l'image acquise par la première caméra, et la dernière dimension correspondant à un premier azimut *θ* et à une première élévation *φ,* et une première carte de caractéristiques de profondeur conditionnée par la caméra de la scène déterminée par le premier réseau neuronal en calculant un codage harmonique sphérique de Laplace (SHE) *E ∈ R*^{*H*×*w*×*d*} dudit tenseur *C* où *d* est le nombre d'harmoniques du SHE,
- un premier module d'entraînement configuré pour minimiser une perte *L_{λMSE1}* qui est une différence entre ladite première représentation 3D de la scène et une représentation 3D de référence de la scène.

10. Système destiné à entraîner un premier réseau neuronal selon la revendication 9, comprenant en outre :
- un deuxième réseau neuronal configuré pour :
- obtenir une deuxième image de la scène acquise par une deuxième caméra ;
- déterminer une deuxième représentation 3D de la scène en se basant sur une représentation de la deuxième caméra déterminée par le deuxième réseau neuronal à partir de ladite deuxième image, ladite représentation de la deuxième caméra étant un tenseur *C* ∈ *R*^{*H*×*W*×*2*} où *H* et *W* sont respectivement la hauteur et la largeur de l'image acquise par la deuxième caméra, et la dernière dimension correspondant à un premier azimut *θ* et à une première élévation *φ,* et une deuxième carte de caractéristiques de profondeur conditionnée par la caméra de la scène déterminée par le deuxième réseau neuronal en calculant un codage harmonique sphérique de Laplace (SHE) *E* ∈ *R*^{*H*×*W*×*d*} dudit tenseur *C* où *d* est le nombre d'harmoniques du SHE,
- un deuxième module d'entraînement configuré pour minimiser une perte *L_{λMSE2}* qui est une différence entre ladite deuxième représentation 3D de la scène et la représentation 3D de référence de la scène ;
- un troisième module d'entraînement configuré pour entraîner conjointement le premier réseau neuronal et le deuxième réseau neuronal en minimisant une perte d'optimisation finale consistant en une somme de la perte *L_{λMSE}* et d'une perte de cohérence *L_{con}.*

11. Système comprenant le réseau neuronal selon la revendication 8.

12. Véhicule comprenant le système selon la revendication 11.

13. Programme informatique comprenant des instructions pour exécuter le procédé selon l'une des revendications 1 à 7 lorsqu'il est exécuté par un ordinateur.

14. Support d'enregistrement lisible par un ordinateur et sur lequel est enregistré un programme informatique comprenant des instructions pour exécuter le procédé selon l'une des revendications 1 à 7 lorsqu'il est exécuté par un ordinateur.
